(19) Europäisches Patentamt
European Patent Office
Office européen des brevets

(11) **EP 4 691 608 A1**

(12) **EUROPEAN PATENT APPLICATION**
published in accordance with Art. 153(4) EPC

(43) Date of publication:
**11.02.2026 Bulletin 2026/07**

(21) Application number: **24780279.6**

(22) Date of filing: **26.03.2024**

(51) International Patent Classification (IPC):
**B01D 61/00** (2006.01)   **B01D 69/08** (2006.01)
**B01D 69/12** (2006.01)   **B01D 71/56** (2006.01)

(52) Cooperative Patent Classification (CPC):
**B01D 61/00; B01D 69/08; B01D 69/12; B01D 71/56**

(86) International application number:
**PCT/JP2024/011897**

(87) International publication number:
**WO 2024/204166 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023052320**

(71) Applicant: **Asahi Kasei Kabushiki Kaisha**
**Tokyo 1000006 (JP)**

(72) Inventors:
• **OSAKI, Takahiro**
  **Tokyo 100-0006 (JP)**
• **TAKADA, Ryoichi**
  **Tokyo 100-0006 (JP)**
• **KATAYAMA, Yuji**
  **Tokyo 100-0006 (JP)**

(74) Representative: **D Young & Co LLP**
**3 Noble Street**
**London EC2V 7BQ (GB)**

(54) **RAW MATERIAL LIQUID FLOW DEHYDRATION SYSTEM AND RAW MATERIAL LIQUID FLOW DEHYDRATION METHOD**

(57)   A raw material liquid flow dehydration system in which an induction liquid flow and a raw material liquid flow that contains water and an organic solvent are channeled in a counter flow or a parallel flow via a forward osmosis membrane, and in which the water contained in the raw material liquid flow is passed through the forward osmosis membrane and moved to the induction liquid flow, as a result of which a dehydration raw material liquid flow, which is a dehydrated raw material liquid flow, and a hydration induction liquid flow, which is a hydrated induction liquid flow, are obtained, wherein the saturated water content of the induction liquid flow is greater than the saturated water content of the raw material liquid flow.

Fig. 2

EP 4 691 608 A1

**Description**

FIELD

The present invention relates to a feed solution flow dewatering system and feed solution flow dewatering method, for use in removal of water from a feed solution flow, which is the flow of a feed solution comprising an organic solvent and water, for dewatering of the feed solution.

BACKGROUND

Dewatering of feed solutions comprising organic solvents and water is commonly carried out for a variety of purposes.
PTL 1, for example, describes a method of dewatering a feed solution comprising an organic solvent, a small amount of water and a solute, by a forward osmosis process.

[CITATION LIST]

[PATENT LITERATURE]

[PTL 1] International Patent Publication No. WO2022/154097

SUMMARY

[TECHNICAL PROBLEM]

According to the technology of PTL 1, a large amount of draw solution is necessary to dewater the feed solution, and the dewatering efficiency is not always high.
The present invention has been accomplished in light of these circumstances, and its object is to provide a system and method for efficiently dewatering a feed solution while reducing the amount of draw solution used.

[SOLUTION TO PROBLEM]

The present invention that accomplishes the object described above may be summarized as follows.

<Aspect 1>

A feed solution flow dewatering system wherein:

a feed solution flow comprising water and an organic solvent, and a draw solution flow, are caused to flow in countercurrent flow or cocurrent flow through a forward osmosis membrane, and
the water in the feed solution flow is caused to pass through the forward osmosis membrane and migrate into the draw solution flow, thereby obtaining:

a dewatered feed solution flow as the feed solution flow that has been dewatered, and a hydrated draw solution flow as the draw solution flow that has been hydrated,
wherein the saturated water content of the draw solution flow is greater than the saturated water content of the feed solution flow.

<Aspect 2>

The feed solution flow dewatering system according to aspect 1, wherein the difference $S_{Wd} - S_{Wr}$ between the saturated water content $S_{Wd}$ of the draw solution flow and the saturated water content $S_{Wr}$ of the feed solution flow is 1.00 mass% or greater.

<Aspect 3>

The feed solution flow dewatering system according to aspect 1 or 2, wherein:

the saturated water content of the feed solution flow is less than 5.00 mass%, and
the saturated water content of the draw solution flow is 5.00 mass% or greater.

<Aspect 4>

The feed solution flow dewatering system according to any one of aspects 1 to 3, wherein the difference $S_{Wd} - S_{Wr}$ is 5.00 mass% to 25.0 mass%.

<Aspect 5>

The feed solution flow dewatering system according to any one of aspects 1 to 4, wherein the draw solution flow comprises a hydrophilic polymer which is liquid at 25°C.

<Aspect 6>

The feed solution flow dewatering system according to any one of aspects 1 to 5, wherein the hydrophilic polymer is one or more selected from the group consisting of polyethylene glycol and polypropylene glycol.

<Aspect 7>

The feed solution flow dewatering system according to any one of aspects 1 to 6, wherein the number-average molecular weight of the hydrophilic polymer in terms of polyethylene glycol is 200 to 3,000, as measured by gel permeation chromatography.

<Aspect 8>

The feed solution flow dewatering system according to any one of aspects 1 to 7, wherein the draw solution flow includes the hydrophilic polymer at 50 mass% or greater.

<Aspect 9>

The feed solution flow dewatering system according to any one of aspects 1 to 8, wherein the organic solvent in the feed solution flow comprises one or more selected from the group consisting of tetrahydrofuran, 2-methyltetrahydrofuran, diethyl ether, diisopropyl ether, cyclopentyl methyl ether, t-butyl methyl ether, methyl acetate, ethyl acetate, propyl acetate, isopropyl acetate, butyl acetate, isobutyl acetate, benzene, toluene, o-xylene, m-xylene, p-xylene, acetone, acetonitrile, pentane, hexane, cyclohexane, heptane, methylcyclohexane, isooctane, dichloromethane, chloroform, N,N-dimethylformamide, N,N-dimethylacetamide, N-methyl-2-pyrrolidone, dimethyl sulfoxide and 1,3-dimethyl-2-imidazolidinone.

<Aspect 10>

The feed solution flow dewatering system according to any one of aspects 1 to 9, wherein the feed solution flow comprises a solute.

<Aspect 11>

The feed solution flow dewatering system according to any one of aspects 1 to 10, wherein the amount of water in the feed solution flow is 50 mass% or lower with respect to the total mass of the feed solution flow.

<Aspect 12>

The feed solution flow dewatering system according to any one of aspects 1 to 11, wherein:

the forward osmosis membrane is a composite semipermeable membrane comprising a support layer and a separation active layer formed on the support layer, and
the separation active layer comprises a polyamide.

<Aspect 13>

The feed solution flow dewatering system according to any one of aspects 1 to 12, wherein the forward osmosis membrane is in the form of hollow fibers.

<Aspect 14>

The feed solution flow dewatering system according to any one of aspects 1 to 13, wherein the pressure at the feed solution flow side of the forward osmosis membrane is higher than the pressure at the draw solution flow side of the forward osmosis membrane, the pressure difference being 5 kPa to 200 kPa.

<Aspect 15>

The feed solution flow dewatering system according to any one of aspects 1 to 14, wherein the water content of the forward osmosis membrane is 150 $g/m^2$ or lower.

<Aspect 16>

A feed solution flow dewatering method carried out using a feed solution flow dewatering system according to any one of aspects 1 to 15, the method comprising a feed solution flow dewatering step,

wherein a feed solution flow comprising water and an organic solvent as solvents, and a draw solution flow, are caused to flow in countercurrent flow or cocurrent flow through a forward osmosis membrane, and
water in the feed solution flow is caused to pass through the forward osmosis membrane and migrate into the draw solution flow, thereby obtaining:
a dewatered feed solution flow as the feed solution flow that has been dewatered, and a hydrated draw solution flow as the draw solution flow that has been hydrated.

<Aspect 17>

The feed solution flow dewatering method according to aspect 16, which comprises, before the feed solution flow dewatering step, a forward osmosis membrane water content-lowering step, in which the water content of the forward osmosis membrane is lowered.

<Aspect 18>

The feed solution flow dewatering method according to aspect 17, wherein the forward osmosis membrane water content-lowering step is a step in which the water in the forward osmosis membrane is replaced with the organic solvent in the feed solution flow.

[ADVANTAGEOUS EFFECTS OF INVENTION]

According to the invention there is provided a system and method for efficiently dewatering a feed solution while reducing the amount of draw solution used.

Specifically, the feed solution flow dewatering system and method of the invention exhibits high dewatering efficiency for a feed solution per unit mass of the draw solution used.

BRIEF DESCRIPTION OF DRAWINGS

Fig. 1 is a simplified cross-sectional view illustrating an example of the structure of a forward osmosis membrane module used in the feed solution flow dewatering system of the invention.
Fig. 2 is a conceptual drawing illustrating an example of the construction of the feed solution flow dewatering system of the invention.
Fig. 3 is a graph showing the relationship between the difference $S_{Wd} - S_{Wr}$ between the saturated water content $S_{Wd}$ of the draw solution flow and the saturated water content $S_{Wr}$ of the feed solution flow, and the dewatering efficiency E per unit mass of the draw solution, for the Examples and Comparative Examples.

DESCRIPTION OF EMBODIMENTS

The feed solution flow dewatering system of the invention is a feed solution flow dewatering system wherein:

a feed solution flow comprising water and an organic solvent, and a draw solution flow, are caused to flow in countercurrent flow or cocurrent flow through a forward osmosis membrane, and
water in the feed solution flow is caused to pass through the forward osmosis membrane and migrate into the draw solution flow, thereby obtaining:

a dewatered feed solution flow as the feed solution flow that has been dewatered, and a hydrated draw solution flow as the draw solution flow that has been hydrated,
wherein the saturated water content of the draw solution flow is greater than the saturated water content of the feed solution flow.

The saturated water content of the feed solution flow is less than 5.00 mass%, for example, and the saturated water content of the draw solution flow is 5.00 mass% or greater, for example.

The present inventors have studied in detail the factors that affect dewatering efficiency when dewatering a feed solution flow comprising water and an organic solvent by a forward osmosis process. As a result, it was found that the dewatering efficiency by forward osmosis is in a particular relationship with the saturated water contents of the feed solution flow and draw solution flow.

Specifically, the present inventors found that dewatering efficiency by forward osmosis is notably improved when the saturated water content of the draw solution flow is greater than the saturated water content of the feed solution flow.

The present invention has been devised on the basis of this knowledge.

Each of the elements composing the feed solution flow dewatering system of the invention will now be described in order.

<Feed solution flow>

The feed solution flow according to the invention is the flow of the feed solution, including water and an organic solvent, and it may also include a solute.

<Organic solvent>

According to the invention, the organic solvent in the feed solution may be, for example, tetrahydrofuran, 2-methyltetrahydrofuran, diethyl ether, diisopropyl ether, cyclopentyl methyl ether, $t$-butyl methyl ether, methyl acetate, ethyl acetate, propyl acetate, isopropyl acetate, butyl acetate, isobutyl acetate, benzene, toluene, $o$-xylene, $m$-xylene, $p$-xylene, acetone, acetonitrile, pentane, hexane, cyclohexane, heptane, methylcyclohexane, isooctane, dichloromethane, chloroform, N,N-dimethylformamide, N,N-dimethylacetamide, N-methyl-2-pyrrolidone, dimethyl sulfoxide or 1,3-dimethyl-2-imidazolidinone, and it may comprise one or more first organic solvents selected from the foregoing.

The organic solvent in the feed solution may comprise or not comprise a second organic solvent other than the first organic solvent. Examples of second organic solvents include methanol, ethanol, 1-propanol, 2-propanol, 1-butanol, 2-butanol, 2-methyl-1-propanol, 3-methyl-1-butanol, 1-pentanol, ethylene glycol, 2-methoxyethanol, 2-ethoxyethanol, 1,2-dimethoxyethane, 1,1-dimethoxymethane, 2,2-dimethoxypropane, 1,1-diethoxypropane, 1,4-dioxane, anisole, petroleum ether, methyl ethyl ketone, methyl isopropyl ketone, methyl butyl ketone, methyl isobutyl ketone, formic acid, acetic acid, trichloroacetic acid, trifluoroacetic acid, ethyl formate, formamide, ethylbenzene, cumene, tetralin, chlorobenzene, 1,2-dichloroethane, 1,1-dichloroethene, 1,2-dichloroethene, 1,1,1-trichloroethane, 1,1,2-trichloroethene, carbon tetrachloride, nitromethane, pyridine and sulfolane.

The organic solvent in the feed solution may include the first organic solvent at 60 mass% or greater, 70 mass% or greater, 80 mass% or greater, 90 mass% or greater or 95 mass% or greater with respect to the total mass of the organic solvent, or the total amount of organic solvent in the feed solution may be the first organic solvent.

<Solute>

The feed solution of the invention may also comprise a solute.

The feed solution flow dewatering system of the invention has the advantage of allowing dewatering of the feed solution without heating the feed solution and without requiring special pretreatment of the feed solution. Therefore, the feed solution flow dewatering system of the invention is preferably applied for dewatering of a feed solution containing a solute that is readily altered under stress such as heating or pretreatment.

From this viewpoint, the solute in the feed solution of the feed solution flow dewatering system of the invention is preferably one or more selected from among pharmaceuticals, active pharmaceutical ingredients, development pipelines (medical and pharmaceutical candidate compounds), intermediate bodies and starting materials.

An active pharmaceutical ingredient is a substance (active ingredient) having pharmacological action in the stage of a final product (pharmaceutical or formulation), and it serves as a starting material for production of the pharmaceutical.

A development pipeline (medical or pharmaceutical candidate compound) is a candidate pharmaceutical compound from the stage of research and development, through clinical trials (tests) until being marketed as a drug, and it is often referred to as a "new drug candidate". Such a drug is marketed as a drug after having been explored as a novel compound and approved following different clinical trial phases (phase I, phase II and phase III). A development pipeline referred to herein may be a compound at any development stage prior to its approval as a drug.

Active pharmaceutical ingredients and development pipelines include low molecular pharmaceuticals; medium molecular pharmaceuticals such as nucleic acid drugs and peptide drugs; polymer pharmaceuticals such as antibody drugs and protein drugs; and low molecular pharmaceuticals bonded to antibodies, such as antibody-drug conjugates (ADC), as well as their derivatives.

Active pharmaceutical ingredients and development pipelines are produced by chemical synthesis, fermentation or extraction, or a combination of such processes.

An intermediate is produced in an intermediate step during manufacture of an active pharmaceutical ingredient or development pipeline, and it can be converted to an active pharmaceutical ingredient or development pipeline by subsequent manufacturing steps. The intermediate may be an active pharmaceutical ingredient starting substance incorporated as a key constituent of the structure of the active pharmaceutical ingredients, a key intermediate body having at least one essential feature (a specific stereochemical structure or pharmacological activity) introduced into the molecular structure, or a final intermediate by which an active pharmaceutical ingredient is produced by one further reaction.

A starting material is a substance used for manufacture of an active pharmaceutical ingredient or development pipeline, and it may be a chemical species not found in the active pharmaceutical ingredient or development pipeline, or a mixture containing the chemical species. Examples of starting materials include, but are not limited to, one or more from among starting substances for production of active pharmaceutical ingredients, starting substances for production of development pipelines, catalysts, unrefined active pharmaceutical ingredients and unrefined development pipelines.

Examples of solutes include amino acids, peptides, proteins, sugars, vaccines, nucleic acids, antibiotics, vitamins, natural substances, synthetic starting materials or intermediates known as "building blocks", and derivatives of the foregoing.

Amino acids include essential amino acids, non-essential amino acids and non-natural amino acids. Examples of essential amino acids include tryptophan, lysine, methionine, phenylalanine, threonine, valine, leucine and isoleucine. Examples of non-essential amino acids include arginine, glycine, alanine, serine, tyrosine, cysteine, asparagine, glutamine, proline, aspartic acid and glutamic acid.

A non-natural amino acid is any artificial compound having an amino acid backbone in the same molecule and not found in nature, and it can be synthesized by bonding various labeling compounds to an amino acid backbone. The term "amino acid backbone" includes the carboxyl and amino groups in the amino acids, and the portions connecting them. The term "labeling compound" refers to a pigment compound, a fluorescent substance, a chemical/bioluminescent substance, an enzyme substrate, a coenzyme, an antigenic substance or a protein-binding substance that is known to those skilled in the art.

An example of a non-natural amino acid is a "labeled amino acid" which is an amino acid bonded to a labeling compound. Examples of labeled amino acids include amino acids having a labeling compound bonded to an amino acid which comprises an amino acid backbone including an aromatic ring such as a benzene ring on a side chain. Examples of non-natural amino acids with specific functions include photoresponsive amino acids, photo-switchable amino acids, fluorogenic probe amino acids and fluorescent-labeled amino acids.

Peptides are compounds having at least 2 and less than 70 amino acid residues bonded together, either in a linear or cyclic fashion, and optionally with a branched structure. Examples of peptides to be concentrated include L-alanyl-L-glutamine, β-alanyl-L-histidine cyclosporin and glutathione.

Proteins are generally amino acid residue-bonded compounds having longer chain lengths than peptides. Proteins are preferably those applied in protein preparations. Examples of protein preparations include interferon-$\alpha$, interferon-$\beta$, interleukin-1 to 12, growth hormones, erythropoietin, insulin, granulocyte colony-stimulating factor (G-CSF), tissue plasminogen activator (TPA), sodium diuretic peptide, blood clotting factor VIII, somatomedin, glucagon, growth hormone releasing factor, serum albumin and calcitonin.

Examples of sugars include monosaccharides (for example, glucose, fructose, galactose, mannose, ribose and deoxyribose), disaccharides (for example, maltose, sucrose and lactose), saccharide derivatives (for example, glucose, galactose, mannose, fucose, xylose, glucuronic acid and iduronic acid; N-acetylglucosamine, N-acetylgalactosamine, N-acetylneuraminic acid and glucose 5-acetic acid), and sugar chains having a structure with a monosaccharide bonded by glycoside bonding (such as agarose and cyclodextrin).

Examples of vaccines include hepatitis A vaccine, hepatitis B vaccine, hepatitis C vaccine and COVID-19 vaccine,

examples of nucleic acids include oligonucleotides, RNA, aptamers and decoys, and
examples of antibiotics include streptomycin and vancomycin.

Examples of vitamins include the vitamin A group, vitamin B group and vitamin C group, including their derivatives and salts. The vitamin B group includes vitamin B6 and vitamin B12, for example.

The number-average molecular weight of a solute in the feed solution may be about 100 to 50,000, preferably about 100 to 30,000, more preferably about 100 to 10,000, and especially preferably 100 to 6,000.

If the molecular weight of the solute is too low, it may permeate through the forward osmosis membrane, while if the molecular weight is too high the solute may adhere onto the membrane surface, which is also undesirable.

The number-average molecular weight of the solute can be determined by calculation of the solute from the chemical formula, if it has a relatively low molecular weight (for example, a molecular weight of 2,000 or lower). When the molecular weight of the solute is relatively high (such as a molecular weight of greater than 2,000), the number-average molecular weight can be determined as the number-average molecular weight in terms of polyethylene glycol, as measured by gel permeation chromatography (GPC).

The molecular weight can be measured by matrix-assisted laser desorption ionization timeof-flight mass spectrometry (MALDI ToF-MS), for a solute without an appropriate reference sample and whose molecular weight cannot be accurately measured by GPC.

The feed solution flow may also be the flow of an analysis solution that is analyzed for quality control of the active pharmaceutical ingredient or formulation, and for impurity management. Such an analysis solution may be a cleaning agent or rinse liquid used for washing of equipment after drug manufacturing; or an extract obtained by extracting impurities from an active pharmaceutical ingredient or formulation. The solute to be analyzed in such an analysis solution may be a compound with mutagenicity or a compound with recognized carcinogenesis risk, and specifically it may be a nitrosoamine.

<Water>

The feed solution of the invention comprises water.

The water in the feed solution is designed to be removed by the feed solution flow dewatering system of the invention. In order to obtain a sufficiently dewatered feed solution, a lower amount of water in the feed solution is preferred.

From this viewpoint, the amount of water in the feed solution may be 50 mass% or lower, 40 mass% or lower, 30 mass% or lower, 20 mass% or lower, 15 mass% or lower, 10 mass% or lower or 5 mass% or lower, with respect to the total mass of the feed solution.

A feed solution with a high water content above this range may be applied to the feed solution flow dewatering system of the invention after having been first dewatered to within the range by a known suitable method.

With the feed solution flow dewatering system of the invention, effective dewatering is carried out even when the feed solution contains trace amounts of water at 100 ppm or greater, 250 ppm or greater, 500 ppm or greater, 750 ppm or greater or 1,000 ppm (0.1 mass%) or greater, with respect to the total mass.

<Draw solution flow>

The draw solution flow is the flow of the draw solution.

As explained below, the saturated water content of the draw solution flow in the feed solution flow dewatering system of the invention is greater than the saturated water content of the feed solution flow. In other words, the feed solution has higher hydrophobicity than the draw solution.

A forward osmosis membrane is generally composed of a hydrophilic material. In the feed solution flow dewatering system of the invention, therefore, the feed solution with high hydrophobicity and the draw solution with high hydrophilicity contact through the hydrophilic forward osmosis membrane. This can potentially cause the hydrophilic draw solution to pass through the hydrophilic forward osmosis membrane and migrate into the feed solution.

From the viewpoint of avoiding this situation, the draw solution may include a polymer of a size that does not pass through the pores of the forward osmosis membrane. From the viewpoint of increasing the saturated water content of the draw solution flow, the polymer may be hydrophilic. From the viewpoint of ensuring the flow property of the draw solution flow, the polymer may be liquid at the operating temperature of the feed solution flow dewatering system of the invention. Since the feed solution flow dewatering system of the invention can operate at room temperature, for example, the polymer may be one that is liquid at room temperature (for example, 25°C).

To summarize, the draw solution in the feed solution flow dewatering system of the invention preferably comprises a hydrophilic polymer which is liquid at 25°C.

Examples of hydrophilic polymers include polyethylene glycol, polypropylene glycol, polyacrylic acid, poly(methacrylic acid) and sodium polystyrene sulfonate, as well as copolymers comprising two or more of these, any one or more of which may be selected. The hydrophilic polymer is most preferably one or more selected from the group consisting of polyethylene glycol and polypropylene glycol.

In order to avoid migration into the feed solution, the hydrophilic polymer should have a large enough size so that it does not pass through the pores of the forward osmosis membrane, and a molecular weight small enough to ensure the flow property of the draw solution flow. From this viewpoint, the hydrophilic polymer in the draw solution may have a number-average molecular weight of 200 to 3,000 and preferably 500 to 2,000, in terms of polyethylene glycol, as measured by gel permeation chromatography.

The draw solution in the feed solution flow dewatering system of the invention may consist entirely of a hydrophilic polymer, or it may be a mixture of a hydrophilic polymer and another component.

The other component is preferably an organic solvent, and typically an organic solvent in which the hydrophilic polymer in the draw solution is soluble.

Specific examples of such organic solvents include tetrahydrofuran, 2-methyltetrahydrofuran, diethyl ether, cyclopentyl methyl ether, t-butyl methyl ether, methyl acetate, ethyl acetate, propyl acetate, isopropyl acetate, butyl acetate, isobutyl acetate, toluene, acetone, acetonitrile, N,N-dimethylformamide, N,N-dimethylacetamide, N-methyl-2-pyrrolidone, dimethyl sulfoxide and 1,3-dimethyl-2-imidazolidinone, any one or more of which may be selected and included.

Surprisingly, even when the draw solution comprises an organic solvent together with the hydrophilic polymer in the feed solution flow dewatering system of the invention, virtually no phenomenon of "back diffusion" is seen in which the organic solvent in the draw solution flow passes through the forward osmosis membrane and migrates to the feed solution flow.

The draw solution is preferably composed entirely of a hydrophilic polymer, or it is composed of a hydrophilic polymer and an organic solvent.

According to the invention, the content ratio of the hydrophilic polymer in the draw solution may be 50 mass% or greater, 60 mass% or greater, 70 mass% or greater, 80 mass% or greater, 90 mass% or greater, 95 mass% or greater or 99 mass% or greater, with respect to the total mass of the draw solution.

<Saturated water content>

The saturated water content of the draw solution flow in the feed solution flow dewatering system of the invention is greater than the saturated water content of the feed solution flow.

The difference between the saturated water content $S_{Wd}$ of the draw solution flow and the saturated water content $S_{Wr}$ of the feed solution flow ($S_{Wd} - S_{Wr}$) may be 1.00 mass% or greater, 5.00 mass% or greater, 10.0 mass% or greater, 15.0 mass% or greater, 20.0 mass% or greater, 25.0 mass% or greater, 30.0 mass% or greater or 50 mass% or greater, for example. The upper limit for $S_{Wd} - S_{Wr}$ is not restricted from the standpoint of the effect of the invention, and may be 95.0 mass% or lower, 90.0 mass% or lower, 80.0 mass% or lower, 70.0 mass% or lower, 60.0 mass% or lower, 50.0 mass% or lower, 40.0 mass% or lower, 30.0 mass% or lower or 25.0 mass% or lower, for example.

In the feed solution flow dewatering system of the invention, a larger difference $S_{Wd} - S_{Wr}$ corresponds to higher dewatering efficiency for the feed solution flow per unit mass of the draw solution used.

The saturated water content of the feed solution flow may be lower than 5.00 mass%, and it may be 4.00 mass% or lower, 3.00 mass% or lower, 2.00 mass% or lower, 1.00 mass% or lower or 0.50 mass% or lower. The saturated water content of the feed solution flow may be 0.05 mass% or higher.

The saturated water content of the draw solution flow may be 5.00 mass% or higher, or it may be 7.50 mass% or higher, 10.0 mass% or higher, 15.0 mass% or higher or 20.0 mass% or higher. There is no particular upper limit for the saturated water content of the draw solution flow, and it may be freely miscible with water (saturated water content = ∞ (infinity)).

The saturated water content of the feed solution flow and draw solution flow is the value measured by the following method.

A procedure in which the liquids to be measured, i.e. the feed solution in the feed solution flow and the draw solution in the draw solution flow, are thoroughly dried and then water is added in small portions at a time and stirred in, is repeated until the liquid to be measured separates into the two phases (the aqueous phase and organic phase), and no longer mixes as a single phase. After separation into two layers, the organic phase is sampled and the water content is measured, recording the obtained value as the saturated water content.

Drying of the feed solution and draw solution may be carried out using a known desiccant such as a Molecular Sieves, Silica Gel or the like.

Measurement of the water content may be accomplished by a known method, such as measuring with a Karl Fischer moisture measuring device.

<Forward osmosis membrane>

The forward osmosis membrane used in the feed solution flow dewatering system of the invention may be a known filtration membrane known as a microfiltration membrane, ultrafiltration membrane or nanofiltration membrane, or it may be a composite semipermeable membrane comprising a support layer and a separation active layer formed on the support layer.

When the forward osmosis membrane used is a filtration membrane such as a microfiltration membrane, ultrafiltration membrane or nanofiltration membrane, the material composing the filtration membrane may be a silicone-based polymer, for example.

When a nanofiltration membrane composed of a silicone-based polymer is used as the forward osmosis membrane, the molecular weight cutoff may be 100 or greater, 150 or greater, 200 or greater, 250 or greater or 300 or greater, and 1,000 or lower, 800 or lower, 600 or lower, 500 or lower or 400 or lower, for example.

When the forward osmosis membrane is a composite semipermeable membrane comprising a support layer and a separation active layer formed on the support layer, the separation active layer may be provided on one or both sides of the support layer. When the separation active layer is provided only on one side of the support layer, the side on which the separation active layer has been formed is preferably the feed solution flow side.

A support layer is a membrane for support of the separation active layer, and the layer itself preferably exhibits essentially no separation performance for the substance to be separated. The support layer used may also be one that comprises a publicly known microporous membrane or a nonwoven fabric support layer.

A preferred support layer according to the invention is a porous support layer. The porous support layer has pores with pore sizes of preferably 0.001 $\mu$m to 0.1 $\mu$m and more preferably 0.005 $\mu$m to 0.05 $\mu$m on the surface. The structure from one side surface of the porous support layer to the opposite side surface in the thickness direction of the membrane is preferably as sparse as possible, while maintaining strength, in order to reduce the permeation resistance for permeating water. The sparse structure at these sections preferably consists of reticular or fingerlike voids, or combinations thereof.

The separation active layer of the forward osmosis membrane is preferably a thin-film layer composed mainly of at least one substance selected from among polysulfone, polyethersulfone, polyvinylidene fluoride, polyacrylonitrile, polyethylene, polypropylene, polyamide, polyimide and cellulose acetate, for example. More preferably, the layer is composed mainly of at least one polymer selected from among polyvinylidene fluoride, polyacrylonitrile, polyamide and polyimide, even more preferably it is a layer comprising a polyamide, and most preferably it is a layer comprising a polyamide. The polymer composing the separation active layer may be crosslinked or non-crosslinked. When the separation active layer is a crosslinked polymer, the degree of crosslinking may be as desired.

A separation active layer comprising a polyamide can be formed by interfacial polymerization of a polyfunctional acid halide and a polyfunctional amine on the support layer.

A polyfunctional acid halide is an acid halide compound having two or more acid halide groups in the molecule. Specific examples of polyfunctional acid halides include trimesic acid trichloride, isophthaloyl dichloride and terephthaloyl dichloride, any one or more of which may be suitably used.

A polyfunctional amine is an amino compound having two or more amino groups in the molecule. Specific examples of polyfunctional amines that may be suitably used include one or more selected from among m-phenylenediamine and p-phenylenediamine.

The interfacial polymerization between the polyfunctional acid halide and the polyfunctional amine can be carried out by an established method.

The forward osmosis membrane may have a structure such as a hollow fiber, tubular or flat membrane form, for example. A hollow fiber forward osmosis membrane is preferred as it allows formation of a flow channel for passage of the feed solution and draw solution, without using a spacer, allowing dewatering of the feed solution flow to be carried out in a uniform manner.

The forward osmosis membrane is preferably used in the form of a forward osmosis membrane module housed in an appropriate housing.

A hollow fiber forward osmosis membrane module comprising a plurality of hollow fiber forward osmosis membranes housed in an appropriate housing is particularly preferred from the viewpoint of allowing the membrane area per unit volume to be increased.

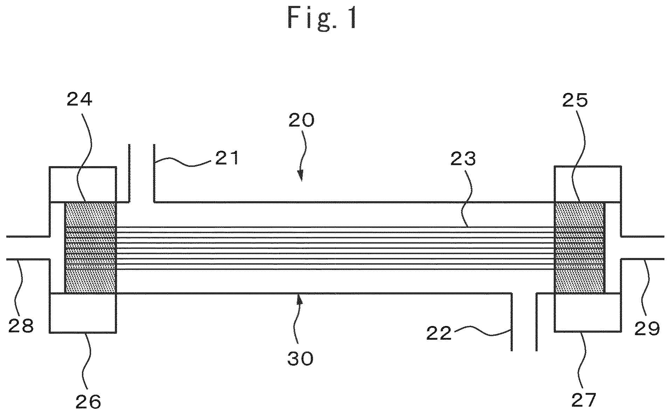

Fig. 1 is a simplified cross-sectional view showing an example of the structure of a hollow fiber forward osmosis membrane module that is preferred for use in the feed solution flow dewatering system of the invention.

In the forward osmosis membrane module (20) shown in Fig. 1, a plurality of hollow fiber forward osmosis membranes (23) are housed in a housing (30). Both ends of the forward osmosis membrane (23) are adhesively anchored to the housing (30) by adhesive anchoring parts (24, 25).

Headers (26, 27) are disposed at both ends of the housing (30), each of the headers (26, 27) having a respective core side conduit (28, 29) communicating with the space inside the forward osmosis membrane (23). One of the core side conduits (28, 29) is the feed solution inlet, and the other is the dewatered feed solution outlet.

On the side wall of the housing (30) there are two shell side conduits (21, 22) communicating with the space on the outside of the forward osmosis membrane (23). One of the shell side conduits (21, 22) is the draw solution inlet, and the other is the hydrated draw solution outlet.

The interior of the housing (30) is divided into two parts, a space through which the feed solution flows and a space through which the draw solution flows, by the membrane part and the adhesive anchoring parts (24, 25) of the forward osmosis membrane (23), both spaces being blocked from flow except for back and forth movement of water through the membrane part of the forward osmosis membrane (23).

When the feed solution is introduced from either of the core side conduits (28, 29) of the forward osmosis membrane module (20) (the feed solution inlet), the feed solution flow (flow of the feed solution) reaches the inner space of the hollow fiber forward osmosis membrane (23). Likewise, when the draw solution is introduced from either of the shell side conduits (21, 22) of the housing (30) (the draw solution inlet), the draw solution flow (flow of the draw solution) reaches the outer space of the hollow fiber forward osmosis membrane (23). During this time, the feed solution flow and draw solution flow contact through the membrane section of the forward osmosis membrane (23), causing water to migrate from the feed solution flow into the draw solution flow. This results in dewatering of the feed solution flow.

The feed solution flow is dewatered while flowing through the inner space of the hollow fiber forward osmosis membrane (23), and flows out as the dewatered feed solution flow from the other of the core side conduits (28, 29) (dewatered feed solution outlet). Likewise, the draw solution flow is hydrated while flowing through the outer space of the hollow fiber forward osmosis membrane (23), and flows out as the hydrated draw solution flow from the other of the shell side conduits (21, 22) (hydrated draw solution outlet).

It is by this mechanism that the feed solution flow is dewatered according to the invention.

When the forward osmosis membrane (23) has a support layer and a separation active layer formed on one side of the support layer, the separation active layer is preferably formed on the side in contact with the feed solution flow, as mentioned above. Therefore, in the forward osmosis membrane module (20) shown in Fig. 1 wherein the feed solution flow flows through the inner space of the hollow fiber forward osmosis membrane, the separation active layer is preferably provided on the inner side of the hollow fiber support layer.

The forward osmosis membrane used in the feed solution flow dewatering system of the invention preferably has a water content of 150 g/m$^2$ or lower. The water content of the forward osmosis membrane may be 125 g/m$^2$ or lower, 100 g/m$^2$ or lower, 50 g/m$^2$ or lower, 30 g/m$^2$ or lower, 20 g/m$^2$ or lower, 10 g/m$^2$ or lower or 5 g/m$^2$ or lower.

The water content of the forward osmosis membrane can be calculated by contacting the forward osmosis membrane with a hydrophilic organic solvent to extract the moisture in the forward osmosis membrane with the hydrophilic organic solvent, and then using the water content of the hydrophilic organic solvent before and after contact, and the membrane area of the forward osmosis membrane.

As explained below, the forward osmosis membrane in the feed solution flow dewatering system of the invention is preferably used in the form of a forward osmosis membrane module housed in a housing. In this case, the water content of the forward osmosis membrane can be calculated by the following formula (1), by circulating the hydrophilic organic solvent through the feed solution flow side space and draw solution flow side space of the forward osmosis membrane module, and using the water content of the hydrophilic organic solvent before and after circulation, and the membrane area of the forward osmosis membrane.

[Mathematical Formula 1]

$$\text{Membrane water content } = \frac{Wf \times (Cwfl - Cwf0) + Wd \times (Cwdl - Cwd0)}{M} \qquad (1)$$

{In formula (1),

Wf is the mass (g) before circulation of the hydrophilic organic solvent that has been circulated through the feed solution flow side space,

Cwf1 is the water content after circulation of the hydrophilic organic solvent that has been circulated through the feed solution flow side space,

Cwf0 is the water content before circulation of the hydrophilic organic solvent that has been circulated through the feed solution flow side space,

Wd is the mass (g) before circulation of the hydrophilic organic solvent that has been circulated through the draw solution flow side space,

Cwdl is the water content after circulation of the hydrophilic organic solvent that has been circulated through the draw solution flow side space,

Cwd0 is the water content before circulation of the hydrophilic organic solvent that has been circulated through the draw solution flow side space,

M is the membrane area ($m^2$) of the forward osmosis membrane, and

the units for the calculated membrane water content are "$g/m^2$".}

The amount of hydrophilic organic solvent circulated through the feed solution flow side space may be 400 $g/m^2$ to 3,500 $g/m^2$, as the mass of the hydrophilic organic solvent per unit area of the forward osmosis membrane. When the forward osmosis membrane is in the form of hollow fibers, the inner spaces of the hollow fibers may be 400 $g/m^2$ to 600 $g/m^2$, and the outer spaces of the hollow fibers may be 2,000 $g/m^2$ to 3,500 $g/m^2$. The circulation speed is preferably 100 mm/sec or lower as the linear velocity, and may be 5 mm/sec to 50 mm/sec, for example.

The hydrophilic organic solvent used for measurement of the water content of the forward osmosis membrane is preferably tetrahydrofuran.

As mentioned above, the forward osmosis membrane used in the feed solution flow dewatering system of the invention preferably has a water content of 150 $g/m^2$ or lower.

It is therefore desirable to carry out a forward osmosis membrane water content-lowering step, in which the water content of the forward osmosis membrane is lowered before application of the forward osmosis membrane in the feed solution flow dewatering system of the invention.

The forward osmosis membrane water content-lowering step may be, for example, a step of circulating dry air on the forward osmosis membrane surface, or a step of replacing the water in the forward osmosis membrane with an organic solvent.

The step of circulating dry air on the forward osmosis membrane surface may be carried out with a dry air circulation speed of 1 m/sec to 10 m/sec and preferably 2 m/sec to 8 m/sec as the linear speed, and with a circulation time of 5 seconds to 480 minutes and preferably 10 seconds to 240 minutes, for example. The temperature of the dry air may be as desired, and for example, it may be 0°C to 200°C and preferably 10°C to 100°C, although room temperature is sufficient.

Dry air circulation may be carried out on one or both sides of the forward osmosis membrane, and preferably on both sides of the forward osmosis membrane.

The step of replacing the water in the forward osmosis membrane with an organic solvent may be carried out, for example, by immersing the forward osmosis membrane in an organic solvent. The organic solvent is preferably a hydrophilic organic solvent.

The organic solvent used in this step may be dewatered by a publicly known method.

The immersion time may be 1 second to 1 hour, for example, and is preferably 3 seconds to 30 minutes and more preferably 5 seconds to 10 or 5 minutes. The temperature of the organic solvent may be from 0°C up to the boiling point, for example, and it is preferably 10°C to 50°C, although room temperature is sufficient.

The step of replacing the water in the forward osmosis membrane with an organic solvent may be carried out once, or it may be repeated two or more times. This step is preferably carried out 1 to 4 times.

When the forward osmosis membrane is in the form of a module, the step of replacing the water in the forward osmosis membrane with an organic solvent can be easily carried out by first filling the space in the housing of the module with the organic solvent, and then removing the organic solvent.

<Example of feed solution flow dewatering system>

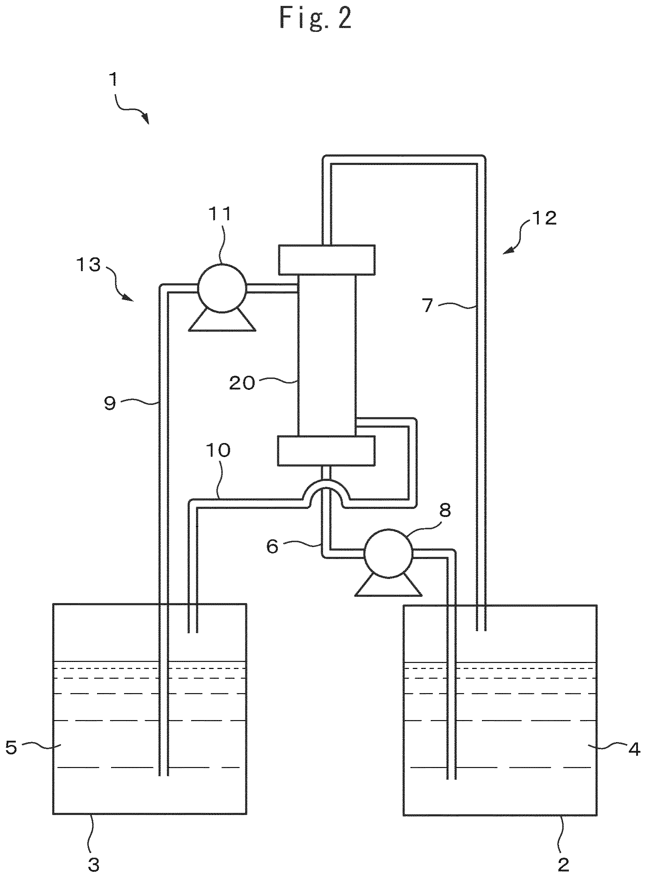

Fig. 2 is a conceptual drawing showing an example of the construction of a feed solution flow dewatering system of the invention.

The feed solution flow dewatering system (1) of Fig. 2 has a feed solution system (12) and a draw solution system (13), which are in contact through the forward osmosis membrane in the forward osmosis membrane module (20).

The feed solution system (12) comprises a feed solution tank (2), feed solution delivery conduits (6, 7) and a feed solution delivery pump (8). The feed solution tank (2) is filled with the feed solution (4), with the feed solution (4) being circulated in the feed solution system (12). That is, the feed solution (4) passes through the feed solution delivery conduit (6) by action of the feed solution delivery pump (8) and enters into the forward osmosis membrane module (20). The feed solution (4) is discharged after having passed through the inner space of the forward osmosis membrane, and returns to the feed solution tank (2) through the feed solution delivery conduit (7).

The draw solution system (13) comprises a draw solution tank (3), draw solution delivery conduits (9, 10) and a draw solution delivery pump (11). The draw solution tank (3) is filled with the draw solution (5), with the draw solution (5) being circulated in the draw solution system (13). That is, the draw solution (5) passes through the draw solution delivery conduit (9) by action of the draw solution delivery pump (11) and enters into the forward osmosis membrane module (20). The draw solution (5) is discharged after having passed through the outer space of the forward osmosis membrane, and returns to the draw solution tank (3) through the draw solution delivery conduit (10).

The feed solution (4) and draw solution (5) are in contact through the membrane section of the forward osmosis membrane in the forward osmosis membrane module (20), but they do not directly mix. When the feed solution (4) and the draw solution (5) have contacted through the membrane section of the forward osmosis membrane, the water in the feed solution (4) passes through the membrane section of the forward osmosis membrane and migrates to the draw solution (5), the feed solution (4) being dewatered to form a dewatered feed solution, and the draw solution (5) being hydrated to form a hydrated draw solution.

The direction of the flow of the feed solution (4) (feed solution flow) and of the flow of the draw solution (5) (draw solution flow) in the forward osmosis membrane module (20) may be cocurrent flows in the same direction through the membrane section of the forward osmosis membrane, or they may be countercurrent flows in opposite directions.

In the feed solution flow dewatering system (1) of Fig. 2, as mentioned above, the feed solution (4) is dewatered while circulating in the feed solution system (12), and the draw solution (5) is hydrated while circulating in the draw solution system (13).

When using the feed solution flow dewatering system (1) of Fig. 2, the mechanism described above can be used to dewater the feed solution (4) to the desired level.

The feed solution flow dewatering system (1) of Fig. 2 is a production system known as a batch system in which the feed solution flow, either all at once or in divided portions, is dewatered in a non-continuous manner, and the dewatered feed solution flow is removed all at once after completion of the dewatering procedure.

The feed solution flow dewatering system of the invention may also be a continuous production system.

In a feed solution flow dewatering system employing a continuous production system, the feed solution flow is continuously supplied to the forward osmosis membrane module with the dewatered feed solution flow being continuously removed, during the period in which the system is operating.

When operation of the feed solution flow dewatering system is continuous, the draw solution flow becomes gradually hydrated, potentially lowering the dewatering efficiency of the feed solution flow with time. In order to avoid such a situation, a draw solution dewatering mechanism may be provided in the draw solution system of the feed solution flow dewatering system.

The draw solution dewatering mechanism may also have the function of contacting the hydrated draw solution with a suitable desiccant or dewatering reagent, for example.

If the water content of the draw solution flow is kept to 100 ppm or lower and preferably 50 ppm or lower, for example, then dewatering of the feed solution flow will take place at high efficiency without providing a draw solution dewatering mechanism.

In the feed solution flow dewatering system of the invention, the draw solution preferably includes a polymer. The viscosity of the draw solution will therefore be high, so that simply passing the draw solution flow through may increase the pressure on the draw solution flow side due to pressure loss. In such cases, the pressure at the feed solution flow side of the forward osmosis membrane is higher than the pressure at the draw solution flow side of the forward osmosis membrane, which increases the traveling speed of water through the forward osmosis membrane and increases the dewatering efficiency. The difference between the pressure on the feed solution flow side of the forward osmosis membrane and the pressure on the draw solution flow side of the forward osmosis membrane may be 5 kPa to 200 kPa, 10 kPa to 150 kPa or 50 kPa to 100 kPa, for example.

<Dewatering efficiency per unit mass of draw solution>

The feed solution flow dewatering system of the invention exhibits high dewatering efficiency for the feed solution per unit mass of the draw solution used. This is expressed in a quantitative manner as follows.

First, the "water migration rate", as the proportion of water that has migrated into the draw solution from the water in the feed solution, is represented by the following formula (2). The "dewatering efficiency", as the water migration rate per dewatering time per membrane area, is represented by the following formula (3). Thus, the dewatering efficiency E per unit mass of the draw solution is therefore represented by the following formula (4).

[Mathematical Formula 2]

$$\text{Water migration rate (wt\%)} = \left(1 - \frac{Wf_{after} \times Rf_{after}}{Wf_{before} \times Rf_{before}}\right) \times 100 \quad (2)$$

$$\text{Dewatering efficiency (wt\%} \cdot m^{-2} \cdot h^{-1}) = \frac{\text{Water migration rate (wt\%)}}{\text{Membrane area (m}^2) \times \text{dewatering time (h)}} \quad (3)$$

$$E \text{ (wt\%} \cdot m^{-2} \cdot h^{-1}) = \text{Dewatering efficiency (wt\%} \cdot m^{-2} \cdot h^{-1}) \times \frac{Wf_{before} + Wd_{before}}{Wd_{before}} \quad (4)$$

In the formulas, $Wf_{before}$ is the initial mass (g) of the feed solution, $Wf_{after}$ is the post-dewatering mass (g) of the feed solution, $Rf_{before}$ is the initial water content (wt%) of the feed solution, $Rf_{after}$ is the post-dewatering water content (wt%) of the feed solution, $Wd_{before}$ is the initial mass (g) of the draw solution, and E is the dewatering efficiency per unit mass of the draw solution (wt% $m^{-2}$ $h^{-1}$).

The reason for multiplying by the dewatering efficiency $((Wf_{before} + Wd_{before})/Wd_{before})$ in formula (4) in which the dewatering efficiency E per unit mass of the draw solution is calculated, is to reflect that the distribution of water in the feed solution and draw solution depends on the total amount of the feed solution and draw solution.

In the feed solution flow dewatering system of the invention, when the saturated water content $S_{Wd}$ of the draw solution flow is greater than the saturated water content $S_{Wr}$ of the feed solution flow, the dewatering efficiency E per unit mass of the draw solution is increased and dewatering of the feed solution flow can be accomplished more efficiently. If the saturated water content $S_{Wd}$ of the draw solution flow is greater than the saturated water content $S_{Wr}$ of the feed solution flow, then presumably the activity of the water on the draw solution flow side will be relatively reduced, thereby promoting migration of water from the feed solution flow to the draw solution flow.

In the feed solution flow dewatering system of the invention, the value of the dewatering efficiency E per unit mass of the draw solution may be 7,000 wt% $m^{-2}$ $h^{-1}$ or greater and especially 10,000 wt% $m^{-2}$ $h^{-1}$ or greater, and dewatering of the feed solution flow can be accomplished very efficiently.

<Feed solution flow dewatering method>

Another aspect of the invention provides a feed solution flow dewatering method.

The feed solution flow dewatering method of the invention is a feed solution flow dewatering method carried out using a feed solution flow dewatering system of the invention as described above, the method comprising a feed solution flow dewatering step,

wherein a feed solution flow comprising water and an organic solvent as solvents, and a draw solution flow, are caused to flow in countercurrent flow or cocurrent flow through a forward osmosis membrane, and
the water in the feed solution flow is caused to pass through the forward osmosis membrane and migrate into the draw solution flow, thereby obtaining:
a dewatered feed solution flow as the feed solution flow that has been dewatered, and a hydrated draw solution flow as the draw solution flow that has been hydrated.

The feed solution flow dewatering method of the invention may also include, before the feed solution flow dewatering step, a forward osmosis membrane water content-lowering step in which the water content of the forward osmosis membrane is lowered. The forward osmosis membrane water content-lowering step may be, for example, a step of circulating dry air on the surface of the forward osmosis membrane, or a step of replacing the water in the forward osmosis membrane with an organic solvent.

The other details regarding the feed solution flow dewatering method of the invention may be applied either directly or with appropriate modifications by a person skilled in the art, based on the above explanation regarding the corresponding elements of the feed solution flow dewatering system of the invention.

EXAMPLES

The invention will now be explained in detail through the following Examples, with the understanding that these Examples are not limitative on the invention.

<Experiment method>

(Fabrication of hollow fiber forward osmosis membrane module)

In each of Examples 1 to 7 and Comparative Examples 1 to 4, an experiment was conducted using a hollow fiber forward osmosis membrane module fabricated in the following manner.

Polyketone with a limiting viscosity of 2.2 dL/g, obtained by complete alternating copolymerization of ethylene and carbon monoxide, was added to a 65 mass% resorcin aqueous solution to a polymer concentration of 15 mass%, and the mixture was stirred and dissolved for 2 hours at 80°C and defoamed to obtain a uniform transparent spinning feed solution. The spinning feed solution was filled into a wet hollow fiber spinning machine equipped with a dual spinneret, and a hollow fiber membrane was formed by phase separation, extruding a 25 mass% methanol aqueous solution from the inside and the spinning feed solution from the outside of the dual spinneret, into a coagulation tank filled with a 40 mass% methanol aqueous solution.

The obtained hollow fiber membrane was cut to a length of 70 cm, bundled and washed. The washed hollow fiber membrane bundle was subjected to solvent exchange with acetone and then further solvent exchanged with hexane, after which it was dried at 50°C. The outer diameter of the polyketone hollow fiber membrane obtained in this manner was 0.8 mm, the inner diameter was 0.5 mm, the void percentage was 78%, and the maximum pore size of the membrane walls was 130 nm. A hollow fiber membrane bundle comprising 80 polyketone hollow fiber membranes was housed in a cylindrical module housing (tubular case) with a diameter of 2 cm and a length of 10 cm, and both ends of the hollow fiber membrane bundle were anchored with an adhesive, after which both ends of the adhesively anchored part were cut to open both ends of the hollow fiber membrane, thereby fabricating a polyketone hollow fiber support layer module with a membrane effective length of 70 mm.

The obtained polyketone hollow fiber support layer module was used for interfacial polymerization on the inner surface of each hollow fiber support layer, as described below.

After placing 20.216 g of m-phenylenediamine and 1.52 g of sodium lauryl sulfate in a 1 L container, 991 g of purified water was added and the mixture was dissolved, preparing a first solution to be used for interfacial polymerization. Next, 0.6 g of trimesic acid trichloride was placed in a separate 1 L container, 300 g of n-hexane was added and the mixture was dissolved to prepare a second solution to be used for interfacial polymerization.

The first solution was filled into the inner side of the hollow fiber support layer (core side) in the polyketone hollow fiber support layer module and allowed to stand for 5 minutes, after which the first solution was removed from the inner side of the hollow fiber support layer. With the inner side of the hollow fiber support layer wetted with the first solution, the core side pressure of the hollow fiber support layer was set to ordinary pressure, and the outside (shell side) pressure of the hollow fiber support layer was set to a reduced pressure of 10 kPa as the absolute pressure (core side pressure > shell side pressure). After standing for 2 minutes in this state, the pressure was maintained while feeding the second solution to the core side of the hollow fiber support layer for 3 minutes at a flow rate of 40 mL/min, for interfacial polymerization to form a separation active layer composed of a polyamide. The polymerization temperature was set to 25°C.

The interfacial polymerized polyketone hollow fiber support layer module was allowed to stand at 50°C for 5 minutes for gasification removal of the n-hexane, and then both the shell side and core side were washed with purified water to fabricate a forward osmosis membrane module with a membrane area of 0.009 m$^2$, having the structure shown in Fig. 1.

(Fabrication of flat-membrane forward osmosis membrane module)

In Example 8 and Comparative Example 5, an evaluation cell by Sterlitech Corporation ("Explorer CF042SS-FO" (effective membrane area: 42 cm$^2$ (0.0042 m$^2$)) was used as the flat-membrane forward osmosis membrane module, with the following flat-membrane forward osmosis membrane installed in it.

The flat-membrane forward osmosis membrane used was "oNF-2" by BORSIG Membrane Technology GmbH. The membrane is a membrane comprising a silicone-based polymer, and it is a nanofiltration membrane with a thickness of approximately 0.21 mm and a molecular weight cutoff of 350.

(Measurement of water content)

The water content was measured using a Karl Fischer water content measuring apparatus (Model CA-310 by Nitto Seiko Analytics Co., Ltd.).

Approximately 0.5 mL of the solution to be measured was taken up with a 1 mL syringe, and approximately 0.1 mL was injected into the apparatus for measurement of the water content.

(Measurement of saturated water content)

First, the water content of the solution was measured by the same method as described above.

Next, a specified amount of the solution after measurement of the water content (pre-drying water content) was taken, Molecular Sieves 3A was loaded in, and the mixture was stirred for 24 hours and dried. The amount of Molecular Sieves 3A loaded in was: Mass (g) before drying of the solution × water content (mass%) before drying × 10 (g).

A procedure of adding water in small portions to the dewatered solution and stirring, was repeated until the solution separated into the aqueous phase and the organic solvent phase (two phases), and no longer mixed as a single phase. The organic solvent phase was sampled and the water content measured by the same method as described above using a Karl Fischer water measuring apparatus was recorded as the saturated water content of the solution being measured.

When the solution did not separate into two phases but maintained a single phase even with addition of water in the same amount as the solution being measured, it was recorded that the solution freely mixed with water (saturated water content = ∞ (infinite)).

The measurements were all carried out at 25°C.

(Dewatering operation)

For the following Examples and Comparative Examples, dewatering of each feed solution flow was carried out by:

incorporating a hollow fiber forward osmosis membrane module as the forward osmosis membrane module (20) in the feed solution flow dewatering system shown in Fig. 2, for Examples 1 to 7 and Comparative Examples 1 to 4, and incorporating the flat-membrane forward osmosis membrane module described above (evaluation cell: "Explorer CF042") instead of the forward osmosis membrane module (20) in the feed solution flow dewatering system shown in Fig. 2, for Example 8 and Comparative Example 5.

The forward osmosis membranes in the forward osmosis membrane modules were each provided for organic solvent removal operation after the pretreatment described below (water content-lowering step).

The respective feed solutions and draw solutions were used in the amounts listed in Table 1. The feed solution flow and draw solution flow were passed through and circulated under the conditions described below, both solutions being contacted through the forward osmosis membrane for dewatering operation.

The operating temperature was 23°C for all of the Examples and Comparative Examples.

The flow conditions for the feed solution flow and draw solution flow were as follows.

(1) Hollow fiber forward osmosis membrane module

Feed solution flow: Flow to core side at a flow rate of 36 mL/min
Draw solution flow: Flow to shell side at a flow rate of 100 mL/min
Flow direction: cocurrent flow

(2) Flat-membrane forward osmosis membrane module

Feed solution flow: Flow to one side of forward osmosis membrane at a flow rate of 100 mL/min.
Draw solution flow: Flow to other side of forward osmosis membrane at a flow rate of 100 mL/min.
Flow direction: cocurrent flow (codirectional)

(Membrane pretreatment (water content-lowering step))

Before supply to the dewatering operation, dry air was circulated through both the shell side and core side of the forward osmosis membrane module for 120 minutes at a flow rate of 5 L/min each, to lower the water content of the forward osmosis membrane.

<Comparative Example 1 and Examples 1 and 2>

For Comparative Example 1 and Examples 1 and 2, a hollow fiber forward osmosis membrane module with a membrane area of 0.009 m$^2$ was used, a solution comprising 10.0 parts by mass of D-(+)-Saccharose Octaacetate (CAS No. 126-14-7) (SoA), 89.9 parts by mass of toluene and 0.1 part by mass of water (saturated water content: 0.129 mass%) was used as the feed solution, and each respective draw solution listed in Table 1 was used, carrying out the dewatering operation for 60 minutes.

The results are shown in Tables 1 to 3.

In Examples 1 and 2, the viscosity of the draw solution was high and the pressure at the draw solution flow side of the forward osmosis membrane was high due to passage of the solution, and therefore the feed solution flow side of the forward osmosis membrane was pressurized in order to increase the pressure at the feed solution flow side of the forward osmosis membrane above the pressure at the draw solution flow side of the forward osmosis membrane. The pressures at the feed solution flow side and draw solution flow side during this time are shown in Tables 1 and 2. The pressures in Tables 1 and 2 are the gauge pressures.

<Comparative Example 2 and Example 3>

For Comparative Example 2 and Example 3, a hollow fiber forward osmosis membrane module with a membrane area of 0.009 m$^2$ was used, a solution comprising 1.0 parts by mass of β-D-Glucose Pentaacetate (CAS No. 604-69-3) (GpA), 95.0 parts by mass of ethyl acetate (EtOAc) and 4.0 parts by mass of water (saturated water content: 4.00 mass%) was used as the feed solution, and each respective draw solution listed in Table 1 was used, carrying out the dewatering operation for 90 minutes.

The results are shown in Tables 1 to 3.

<Comparative Examples 3 and 4, and Examples 4 to 7>

For Comparative Examples 3 and 4 and Examples 4 to 7, a hollow fiber forward osmosis membrane module with a membrane area of 0.009 m$^2$ was used, a solution comprising 49.0 parts by mass of THF, 50.0 parts by mass of toluene and 1.0 parts by mass of water (saturated water content: 1.40 mass%) was used as the feed solution, and each respective draw solution listed in Table 1 was used, carrying out the dewatering operation for 120 minutes.

<Comparative Example 5 and Example 8>

For Comparative Example 5 and Example 8, a flat-membrane forward osmosis membrane module with a membrane area of 0.0042 m$^2$ was used, a solution comprising 49.0 parts by mass of THF, 50.0 parts by mass of toluene and 1.0 parts by mass of water (saturated water content: 1.40 mass%) was used as the feed solution, and each respective draw solution listed in Table 1 was used, carrying out the dewatering operation for 120 minutes.

The results are shown in Tables 1 to 3.

<Comparative Examples 6 and 7>

For Comparative Examples 6 and 7, a hollow fiber forward osmosis membrane module with a membrane area of 0.009 m$^2$ was used, a solution comprising 10.0 parts by mass of SoA, 88.0 parts by mass of isopropyl acetate (i-PrOAc) and 2.0 parts by mass of water (saturated water content: 2.00 mass%) was used as the feed solution, and each respective draw solution listed in Table 1 was used, carrying out the dewatering operation for 90 minutes.

The results are shown in Tables 1 to 3.

In Table 1, "PA/PK" in the "Material" column of the forward osmosis membrane represents a composite semipermeable membrane having a polyamide separation active layer on a polyketone support layer.

The abbreviations of the components in the "Feed solution" column and "Draw solution" column have the following meanings.

SoA: D-(+)-Saccharose Octaacetate (CAS No. 126-14-7)
GpA: β-D-Glucose Pentaacetate (CAS No. 604-69-3)
PPG1000: Polypropylene glycol with number-average molecular weight of ~1,000
PPG700: Polypropylene glycol with number-average molecular weight of ~700
PPG400: Polypropylene glycol with number-average molecular weight of ~400
THF: Tetrahydrofuran
Tol: Toluene

EtOAc: Ethyl acetate
Hex: n-Hexane
t-BuOMe: t-Butyl methyl ether
DMF: Dimethylformamide
i-PrOAc: Isopropyl acetate
$MgCl_2$: Magnesium chloride

[Table 1]

Table 1

| | Forward osmosis membrane | | | Feed solution | | | | |
|---|---|---|---|---|---|---|---|---|
| | Form | Material | Membrane area ($m^2$) | Composition (mass ratio) | Saturated water content Swr (mass%) | Initial water content (ppm) | Initial liquid volume (g) | Pressure (kPa) |
| Comp. Ex. 1 | Hollow fiber | PA/PK | 0.009 | SoA/Tol/$H_2O$ = 10/89.9/0.1 | 0.129 | 1639 | 150.0 | 0 |
| Example 1 | Hollow fiber | PA/PK | 0.009 | SoA/Tol/$H_2O$ = 10/89.9/0.1 | 0.129 | 896 | 150.0 | 38 |
| Example 2 | Hollow fiber | PA/PK | 0.009 | SoA/Tol/$H_2O$ = 10/89.9/0.1 | 0.129 | 1088 | 150.0 | 48 |
| Comp. Ex. 2 | Hollow fiber | PA/PK | 0.009 | GpA/EtOAc/$H_2O$ = 1/95/4 | 4.00 | 40580 | 150.0 | 0 |
| Example 3 | Hollow fiber | PA/PK | 0.009 | GpA/EtOAc/$H_2O$ = 1/95/4 | 4.00 | 51470 | 150.0 | 0 |
| Comp. Ex. 3 | Hollow fiber | PA/PK | 0.009 | THF/Tol/$H_2O$ = 49/50/1 | 1.40 | 10390 | 150.0 | 0 |
| Comp. Example 4 | Hollow fiber | PA/PK | 0.009 | THF/Tol/$H_2O$ = 49/50/1 | 1.40 | 10090 | 150.0 | 0 |
| Example 4 | Hollow fiber | PA/PK | 0.009 | THF/Tol/$H_2O$ = 49/50/1 | 1.40 | 9570 | 150.0 | 0 |
| Example 5 | Hollow fiber | PA/PK | 0.009 | THF/Tol/$H_2O$ = 49/50/1 | 1.40 | 9870 | 150.0 | 0 |
| Example 6 | Hollow fiber | PA/PK | 0.009 | THF/Tol/$H_2O$ = 49/50/1 | 1.40 | 9870 | 150.0 | 0 |
| Example 7 | Hollow fiber | PA/PK | 0.009 | THF/Tol/$H_2O$ = 49/50/1 | 1.40 | 10070 | 150.0 | 0 |
| Comp. Example 5 | Flat-membrane | Silicone | 0.0042 | THF/Tol/$H_2O$ = 49/50/1 | 1.40 | 10930 | 150.0 | 0 |
| Example 8 | Flat-membrane | Silicone | 0.0042 | THF/Tol/$H_2O$ = 49/50/1 | 1.40 | 10970 | 150.0 | 0 |
| Comp. Example 6 | Hollow fiber | PA/PK | 0.0090 | SoA/i-PrOAc/$H_2O$ = 10/88/2 | 2.00 | 22080 | 175.0 | 0 |

**EP 4 691 608 A1**

(continued)

| | Forward osmosis membrane | | | Feed solution | | | | |
| | Form | Material | Membrane area (m²) | Composition (mass ratio) | Saturated water content Swr (mass%) | Initial water content (ppm) | Initial liquid volume (g) | Pressure (kPa) |
|---|---|---|---|---|---|---|---|---|
| Comp. Example 7 | Hollow fiber | PA/PK | 0.0090 | SoA/i-PrOA-c/H$_2$O = 10/88/2 | 2.00 | 19600 | 165.0 | 0 |

[Table 2]

Table 2

| | Draw solution | | | | Swd-Swr | Dewatering time (min) |
| | Composition (mass ratio) | Saturated water content Swd (mass%) | Initial liquid volume (g) | Pressure (kPa) | | |
|---|---|---|---|---|---|---|
| Comp. Example 1 | Tol = 100 | 0.0160 | 433.5 | 0 | -0.113 | 60 |
| Example 1 | PPG700 = 100 | 22.6 | 200.0 | 29 | 22.471 | 60 |
| Example 2 | PEG400 = 100 | ∞ | 150.0 | 44 | 99.871 | 60 |
| Comp. Example 2 | EtOAc = 100 | 4.00 | 150.0 | 0 | 0.000 | 90 |
| Example 3 | PPG400/EtOAc = 50/50 | 13.1 | 150.0 | 0 | 9.100 | 90 |
| Comp. Example 3 | THF/Hex = 50/50 | 0.630 | 150.0 | 0 | -0.770 | 120 |
| Comp. Example 4 | THF/Tol = 50/50 | 1.40 | 150.0 | 0 | 0.000 | 120 |
| Example 4 | \| THF/t-BuOMe = 50/50 \| | 5.00 | 150.0 | 0 | \| 3.600 | 120 |
| Example 5 | MeCN/t-BuOMe = 50/50 | 13.9 | 150.0 | 0 | 12.541 | 120 |
| Example 6 | MeOH/t-BuOMe = 50/50 | 39.8 | 150.0 | 0 | 38.432 | 120 |
| Example 7 | PPG1000/THF = 50/50 | 12.3 | 150.0 | 0 | 10.896 | 120 |
| Comp. Example 5 | THF/Hex = 50/50 | 0.630 | 150.0 | 0 | -0.770 | 120 |
| Example 8 | DMF/Tol = 50/50 | 4.90 | 150.0 | 0 | 3.500 | 120 |
| Comp. Example 6 | I-PrOAc = 100 | 2.00 | 330.0 | 0 | 0.000 | 90 |
| Comp. Example 7 | MgCl$_2$/H$_2$O = 10/90 | ∞ | 430.0 | 0 | 98.000 | 90 |

[Table 3]

18

Table 3

| | Swd-Swr | Post-dewatering feed solution | | Feed solution dewatering efficiency | | |
| --- | --- | --- | --- | --- | --- | --- |
| | | Liquid volume (g) | Water content (ppm) | Water migration rate (wt%) | Dewatering efficiency (wt% m$^{-2}$ h$^{-11}$) | Dewatering efficiency E per unit mass of draw solution (wt% m$^{-2}$ h$^{-1}$) |
| Comp. Example 1 | -0.113 | 150 | 913 | 44.3 | 4922 | 6625 |
| Example 1 | 22.471 | 150 | 281 | 68.6 | 7626 | 13346 |
| Example 2 | 99.871 | 150 | 408 | 62.5 | 6944 | 13889 |
| Comp. Example 2 | 0.000 | 150 | 23190 | 42.9 | 3174 | 6349 |
| Example 3 | 9.100 | 135 | 14390 | 74.8 | 5544 | 11087 |
| Comp. Example 3 | -0.770 | 140.02 | 7804 | 29.9 | 1660 | 3321 |
| Comp. Example 4 | 0.000 | 145.89 | 6083 | 41.4 | 2298 | 4597 |
| Example 4 | 3.600 | 144.15 | 3439 | 65.5 | 3637 | 7274 |
| Example 5 | 12.541 | 129.46 | 3399 | 70.3 | 3904 | 7809 |
| Example 6 | 38.432 | 97.54 | 3723 | 75.5 | 4193 | 8386 |
| Example 7 | 10.896 | 144.93 | 3572 | 65.7 | 3651 | 7303 |
| Comp. Example 5 | -0.770 | 140.46 | 11270 | 3.4 | 431 | 862 |
| Example 8 | 3.500 | 137.76 | 8027 | 32.8 | 4099 | 8198 |
| Comp. Example 6 | 0.000 | 175 | 16690 | 24.4 | 1808 | 2767 |
| Comp. Example 7 | 98.000 | 165 | 16500 | 15.8 | 1172 | 1621 |

Also shown is a graph representing the relationship between the difference $S_{Wd}$ - $S_{Wr}$ between the saturated water content $S_{Wd}$ of the draw solution flow and the saturated water content $S_{Wr}$ of the feed solution flow, and the dewatering efficiency E per unit mass of the draw solution, for the Examples and Comparative Examples.

In Table 1, the difference in initial water content even with the same feed solution composition is possibly due to differences in the degree of absorption of moisture in the air from preparation for the experiment until the start of the experiment.

The water contents of the feed solution flows of Comparative Examples 1, 2 and 6 and Example 3 exceeded the saturated water contents. This may be due to water originally present in the reagents used for preparation of the feed solution, resulting in separation into two phases when the feed solution contained moisture exceeding the saturated water content.

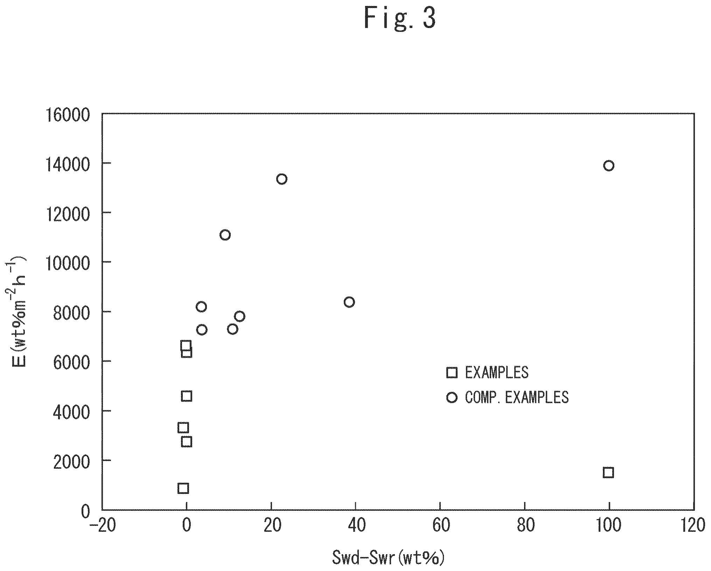

Referring to Tables 1 to 3 and Fig. 3, when the draw solution flow was not an aqueous solution, a correlation was found between the difference $S_{Wd}$ - $S_{Wr}$ between the saturated water content $S_{Wd}$ of the draw solution flow and the saturated water content $S_{Wr}$ of the feed solution flow, and the dewatering efficiency E per unit mass of the draw solution.

The dewatering efficiency can be evaluated as excellent if the dewatering efficiency E per unit mass of the draw solution is 7,000 or greater, and the dewatering efficiency can be evaluated as very excellent if it is 10,000 or greater.

REFERENCE SIGNS LIST

1 Feed solution flow dewatering system
2 Feed solution tank
3 Draw solution tank
4 Feed solution
5 Draw solution
6, 7 Feed solution delivery conduit
8 Feed solution delivery pump
9, 10 Draw solution delivery conduit

11 Draw solution delivery pump
12 Feed solution system
13 Draw solution system
20 Forward osmosis membrane module
21, 22 Shell side conduit
23 Forward osmosis membrane
24, 25 Adhesive anchoring part
26, 27 Header
28, 29 Core side conduit
30 Housing

**Claims**

1. A feed solution flow dewatering system wherein:

   a feed solution flow comprising water and an organic solvent, and a draw solution flow, are caused to flow in countercurrent flow or cocurrent flow through a forward osmosis membrane, and
   the water in the feed solution flow is caused to pass through the forward osmosis membrane and migrate into the draw solution flow, thereby obtaining:

   a dewatered feed solution flow as the feed solution flow that has been dewatered, and a hydrated draw solution flow as the draw solution flow that has been hydrated,
   wherein the saturated water content $S_{Wd}$ of the draw solution flow is greater than the saturated water content $S_{Wr}$ of the feed solution flow.

2. The feed solution flow dewatering system according to claim 1, wherein the difference $S_{Wd} - S_{Wr}$ between the saturated water content $S_{Wd}$ of the draw solution flow and the saturated water content $S_{Wr}$ of the feed solution flow is 1.00 mass% or greater.

3. The feed solution flow dewatering system according to claim 2, wherein:

   the saturated water content of the feed solution flow is less than 5.00 mass%, and
   the saturated water content of the draw solution flow is 5.00 mass% or greater.

4. The feed solution flow dewatering system according to claim 3, wherein the difference $S_{Wd} - S_{Wr}$ is 5.00 mass% to 25.0 mass%.

5. The feed solution flow dewatering system according to claim 4, wherein the draw solution flow comprises a hydrophilic polymer which is liquid at 25°C.

6. The feed solution flow dewatering system according to claim 5, wherein the hydrophilic polymer is one or more selected from the group consisting of polyethylene glycol and polypropylene glycol.

7. The feed solution flow dewatering system according to claim 5, wherein the number-average molecular weight of the hydrophilic polymer in terms of polyethylene glycol is 200 to 3,000, as measured by gel permeation chromatography.

8. The feed solution flow dewatering system according to claim 5, wherein the draw solution flow comprises the hydrophilic polymer at 50 mass% or greater.

9. The feed solution flow dewatering system according to any one of claims 1 to 8, wherein the organic solvent in the feed solution flow comprises one or more selected from the group consisting of tetrahydrofuran, 2-methyltetrahydrofuran, diethyl ether, diisopropyl ether, cyclopentyl methyl ether, t-butyl methyl ether, methyl acetate, ethyl acetate, propyl acetate, isopropyl acetate, butyl acetate, isobutyl acetate, benzene, toluene, o-xylene, m-xylene, p-xylene, acetone, acetonitrile, pentane, hexane, cyclohexane, heptane, methylcyclohexane, isooctane, dichloromethane, chloroform, N,N-dimethylformamide, N,N-dimethylacetamide, N-methyl-2-pyrrolidone, dimethyl sulfoxide and 1,3-dimethyl-2-imidazolidinone.

10. The feed solution flow dewatering system according to any one of claims 1 to 8, wherein the feed solution flow comprises a solute.

11. The feed solution flow dewatering system according to any one of claims 1 to 8, wherein the amount of water in the feed solution flow is 50 mass% or lower with respect to the total mass of the feed solution flow.

12. The feed solution flow dewatering system according to any one of claims 1 to 8, wherein:

   the forward osmosis membrane is a composite semipermeable membrane comprising a support layer and a separation active layer formed on the support layer, and
   the separation active layer comprises a polyamide.

13. The feed solution flow dewatering system according to any one of claims 1 to 8, wherein the forward osmosis membrane is in the form of hollow fibers.

14. The feed solution flow dewatering system according to any one of claims 1 to 8, wherein the pressure at the feed solution flow side of the forward osmosis membrane is higher than the pressure at the draw solution flow side of the forward osmosis membrane, the pressure difference being 5 kPa to 200 kPa.

15. The feed solution flow dewatering system according to any one of claims 1 to 8, wherein the water content of the forward osmosis membrane is 150 g/m$^2$ or lower.

16. A feed solution flow dewatering method carried out using a feed solution flow dewatering system according to any one of claims 1 to 8, the method comprising a feed solution flow dewatering step,

   wherein a feed solution flow comprising water and an organic solvent as solvents, and a draw solution flow, are caused to flow in countercurrent flow or cocurrent flow through a forward osmosis membrane, and
   water in the feed solution flow is caused to pass through the forward osmosis membrane and migrate into the draw solution flow, thereby obtaining:
   a dewatered feed solution flow as the feed solution flow that has been dewatered, and a hydrated draw solution flow as the draw solution flow that has been hydrated.

17. The feed solution flow dewatering method according to claim 16, which comprises, before the feed solution flow dewatering step, a forward osmosis membrane water content-lowering step, in which the water content of the forward osmosis membrane is lowered.

18. The feed solution flow dewatering method according to claim 17, wherein the forward osmosis membrane water content-lowering step is a step in which the water in the forward osmosis membrane is replaced with the organic solvent in the feed solution flow.

Fig. 1

# Fig. 2

Fig. 3

EP 4 691 608 A1

## INTERNATIONAL SEARCH REPORT

| International application No. |
| --- |
| **PCT/JP2024/011897** |

| A. | CLASSIFICATION OF SUBJECT MATTER |
| --- | --- |

*B01D 61/00*(2006.01)i; *B01D 69/08*(2006.01)i; *B01D 69/12*(2006.01)i; *B01D 71/56*(2006.01)i
FI:   B01D61/00 500; B01D69/08; B01D69/12; B01D71/56

According to International Patent Classification (IPC) or to both national classification and IPC

| B. | FIELDS SEARCHED |
| --- | --- |

Minimum documentation searched (classification system followed by classification symbols)

B01D61/00-71/82, B01D53/22, C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/154097 A1 (ASAHI KASEI KABUSHIKI KAISHA) 21 July 2022 (2022-07-21) paragraphs [0012]-[0116], fig. 1-5 | 1-18 |
| A | JP 2016-155078 A (ASAHI KASEI KABUSHIKI KAISHA) 01 September 2016 (2016-09-01) | 1-18 |
| A | WO 2016/024573 A1 (ASAHI KASEI KABUSHIKI KAISHA) 18 February 2016 (2016-02-18) | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/011897**

| Patent document cited in search report | | | Publication date (day/month/year) | Patent family member(s) | | | Publication date (day/month/year) |
|---|---|---|---|---|---|---|---|
| WO | 2022/154097 | A1 | 21 July 2022 | US | 2024/0166574 | A1 | |
| | | | | paragraphs [0041]-[0146], fig. 1-5 | | | |
| | | | | CN | 116710191 | A | |
| | | | | EP | 4279166 | A1 | |
| JP | 2016-155078 | A | 01 September 2016 | (Family: none) | | | |
| WO | 2016/024573 | A1 | 18 February 2016 | AU | 2015302650 | A1 | |
| | | | | CA | 2956666 | A1 | |
| | | | | CN | 106659987 | A | |
| | | | | EP | 3181215 | A1 | |
| | | | | KR | 10-2017-0021879 | A | |
| | | | | SG | 11201700679S | A | |
| | | | | TW | 201615263 | A | |
| | | | | US | 2017/0225131 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022154097 A

**Non-patent literature cited in the description**

- *CHEMICAL ABSTRACTS*, 126-14-7
- *CHEMICAL ABSTRACTS*, 604-69-3